# EUROPEAN PATENT SPECIFICATION

(11) **EP 3 450 362 B1**
(45) Date of publication and mention of the grant of the patent: **09.12.2020**
(21) Application number: 18180475.8
(22) Date of filing: 28.06.2018
(51) Int. Cl.: B65G 57/00, B65G 57/10, B65G 57/24, B65G 60/00, B65G 61/00

(54) **DEVICE FOR LOADING A GROUP OF PRODUCTS ON A PALLET**
VORRICHTUNG ZUM LADEN EINER GRUPPE VON GEGENSTÄNDEN AUF EINER PALETTE
DISPOSITIF POUR CHARGER UN GROUPE DE PRODUITS SUR UNE PALETTE

(30) Priority: 30.08.2017 IT 201700097465
(43) Date of publication of application: 06.03.2019
(73) Proprietor: Elettric 80 S.p.A., 42030 Viano, Reggio Emilia (IT)
(72) Inventor: GUIDI, Roberto, 42030 Viano (Reggio Emilia) (IT); PESCINI, Erminio, 42030 Viano (Reggio Emilia) (IT)
(74) Representative: Feltrinelli, Secondo Andrea

(56) References cited:
- DE-A1- 2 558 556
- DE-A1- 2 924 827
- US-A1- 2006 263 194
- US-A1- 2011 076 128
- US-A1- 2012 070 263
- US-B1- 6 658 816

## Description

### TECHNICAL FIELD OF THE INVENTION

The present invention relates to a device for loading a group of products on a pallet. The present invention also relates to a method for loading a group of products on a pallet.

### PRIOR ART

In some production sectors - for example, but not exclusively, the food sector - as a consequence of specific hygienic requirements, it is necessary that certain areas of the production plant are kept as far as possible from contamination with objects coming from outside the plant itself.

A typical example of these objects of external origin are pallets, on which the groups of products are loaded according to certain configurations that depend on the size and/or shape of the products.

As is known, in fact, since pallets have standard dimensions and features, they travel together with the groups of products until they reach the respective destination, and then often return to the starting point or are destined for other uses.

This means that pallets, very often, may be vectors of dirt or contamination that are not controllable, and therefore potentially dangerous, especially in the production environments of a food establishment.

Currently, to overcome these drawbacks, the products - for example packaged in boxes, crates or other containers - are grouped in an orderly manner, according to certain configurations, on top of temporary and special pallets, enabled to be used in the productive environments in which certain hygienic requirements are in force. Since these special pallets, therefore, cannot be used outside the environment with hygienic restrictions, at a certain moment of the packaging operations they must be replaced with traditional pallets, which instead allow the indiscriminate transport through any environment.

In order to obtain the replacement of the pallet that carries the group of products, there are today certain devices specially developed to perform this function. Document US 2011/076128 A1 discloses a device for loading a group of products on a pallet according to the preamble of claim 1 and a method for loading a group of products on a pallet according to the preamble of claim 10.

These are constructively rather complex and bulky devices, which lift the group of products from the first pallet and, after replacing the latter with a second pallet, release the aforementioned group onto the second pallet.

In some of these devices, the lifting of the product group is carried out by a manipulator, which grasps the assembly and rotates it in space, keeping it suspended in a certain equilibrium balance position while other means carry out the pallet replacement.

These devices, besides being, as said, bulky and constructively complex, and therefore rather expensive, have other drawbacks from the point of view of the limitations of use.

In fact, for certain types of products that must be handled with care - as are very often, for example, food products - the operations performed by the pallet change device on the group of products - lifting, rotating, etc. - are strongly discouraged, as there is a high probability of damage to the individual product units (for example, if packaged in light or small boxes), not to mention the fact that the individual units can also move accidentally with respect to the respective corrected position within the group, or fall to the ground during this step.

The costs for the purchase, storage and maintenance of the above special pallets, which can only be used within the site areas which are marked by certain hygienic restrictions, are also not negligible.

Therefore, the need is felt to allow the loading of a group of products on a pallet preventing any contamination of the hygienically isolated environments and preventing, at the same time, having to resort to constructively complex solutions and not without risk of damage for certain types of products.

### OBJECTS OF THE INVENTION

The aim of the present invention is to improve the prior art.

Within this technical aim, it is an object of the present invention to provide a device for loading a group of products on a pallet which allows overcoming the drawbacks described above.

Another object of the present invention is to provide a device that allows carrying out the operation of loading a group of products on a pallet entirely outside the areas of the plant which have restrictions from the hygienic point of view.

Another object of the present invention is to provide a loading device for a group of products which allows the use of traditional pallets, which are considerably cheaper than special pallets, for uncontaminated areas, currently used in this type of applications.

A further object of the present invention is to provide a device for loading a group of products on a pallet that allows eliminating, or at least reducing to a minimum, the risks of damage and/or fall of the product units.

Another object of the present invention is to provide a device for loading a group of products on a pallet which allows the configuration of the group itself to be kept integral and regular, i.e. the correct position of each of the product units within the group.

This aim and these objects are achieved by the device for loading a group of products on a pallet according to the appended claim 1 and a method for loading a group of products on a pallet according to claim 10.

The device comprises means for supplying a group of products, at least one support for a pallet on which the group of products is intended to be deposited, means for depositing the group of products from the supply means on the pallet, and at least one pallet output unit bearing the group of products.

The deposit means comprise at least one platform, suitable to support the group of products, movable between a first position, in which it is not overlapping the support, and a second position, in which it is at least partially overlapping the support bearing the pallet; the platform is configured in such a way as to unload the group of products on the pallet by fall following the translation from the second position to the first position.

The deposit means further comprise containment means suitable to selectively abut the lateral surfaces of the group of products during the unloading step of the group itself from the platform to the pallet.

According to the invention, the containment means comprise a first robotic arm and a second robotic arm, at the operating ends of which respective pairs of shoulders are associated, which are suitable to abut on all the lateral surfaces of the group of products.

According to another aspect of the invention, the platform comprises at least one roller conveyor with rollers defining a first support surface of the group of products.

The presence of a first support surface consisting of rollers, which could be short pitch rollers, allows the platform to be quickly translated, and thus removed (moving from the above second position to the first position) so that the group of products is placed on the pallet falling from a minimum difference in height (in the order of a few centimeters).

The dependent claims refer to preferred and advantageous embodiments of the invention.

### BRIEF DESCRIPTION OF THE DRAWINGS.

The features of the invention will be better understood by any man skilled in the art from the following description and from the appended drawings, given by way of a non-limiting example, in which:
figure 1 is a perspective view of the device according to the invention, with a sequence of groups of products which advance on the supply means;
figure 2 is a perspective view of the device, in an operating step in which a group of products is ready to be transferred from the supply means to the platform of the deposit means;
figure 3 is a perspective view of the device, in an operating step in which the platform is in its first position, not overlapped to the pallet support;
figure 4 is a perspective view of the device, in an operating step in which a group of products has already been transferred onto the platform;
figure 5 is a perspective view of the device, in which the platform, bearing the group of products, has moved from the first position to the second position, overlapped to the support with the respective pallet;
figure 6 is a perspective view of the device, from a different angle, in which the platform is in its first position, and a pallet has just been deposited on the support; figure 7 is a perspective detailed view of the device in which the platform, bearing the group of products, has moved from the first position to the second position, overlapped to the support with the respective pallet;
figure 8 is a detailed front view of the device, in which the support bearing the respective pallet, and the platform overlapped to the latter, are shown;
figure 9 is a perspective and detailed view of the device in an operating step in which the containment means abut on the side lateral surfaces of the group of products; figure 10 is a perspective detailed view of the device in an operating step in which the platform translates from the second position to the first position, depositing the group of products on the pallet;
figure 11 is a perspective detailed view from a different angle of the device in an operating step in which the pallet, now bearing the respective group of products, leaves the support and is transferred to the subsequent operating stations;
figure 12 is an axonometric view of the deposit means of the device;
figure 13 is an axonometric detailed bottom view of the deposit means;
figure 14 is a lateral view of the deposit means.

### EMBODIMENTS OF THE INVENTION.

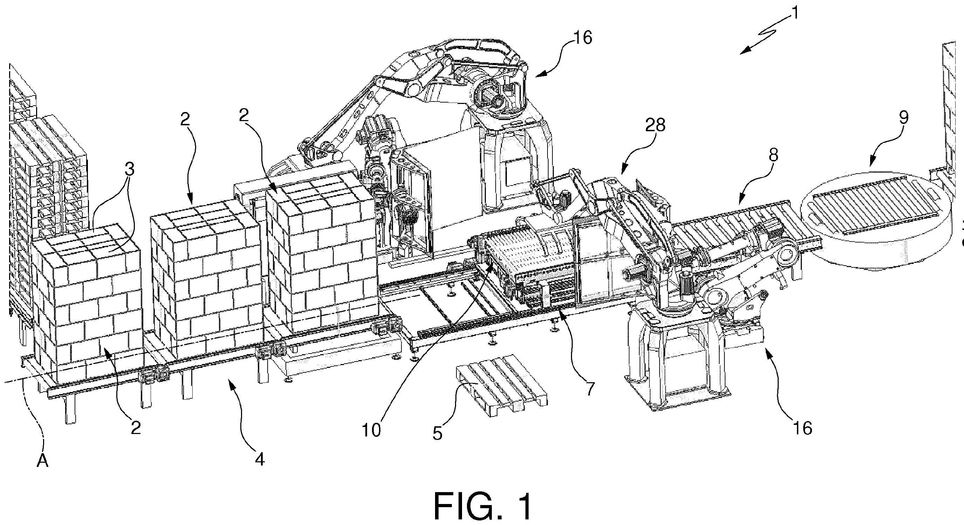

With reference to the accompanying figure 1, a device for loading a group of products on a pallet according to the present invention is indicated with reference numeral 1 as a whole.

In the present description, group 2 of products 3 means a stack of individual products 3 arranged in an orderly manner according to a given configuration.

Products 3 may consist of boxes, cartons or other similar containers, but may also be of another type.

The dimensions and dimensional proportions of group 2 of products 3 may be any, without particular limitations.

In the embodiment of the invention shown in the figures, the group 2 of products 3 has a substantially parallelepiped shape.

The lateral surfaces 2a, 2b of the group 2 are, in this case, regular, i.e. there are no single protruding or recessed products 3.

However, it is not excluded that in some embodiments of the invention, the group 2 may comprise products 3 projecting or recessed according to a given configuration, but in a regular and predetermined manner.

The device 1 comprises supply means 4 of a group 2 of products 3; this group 2 of products 3 is intended to be deposited on a respective pallet 5.

The group 2 of products 3 arrives, on the supply means 4, typically carried by a movable motorized vehicle inside the production site, for example an automated drive vehicle, or of another type.

This vehicle may comprise, for example, a roller conveyor, on which the group 2 of products 3 is deposited, which can be actuated so as to transfer said group 2 to the supply means 4 of the device 1.

The device 1 further comprises at least a support 6 for a pallet 5, on which said group 2 of products 3 is intended to be deposited.

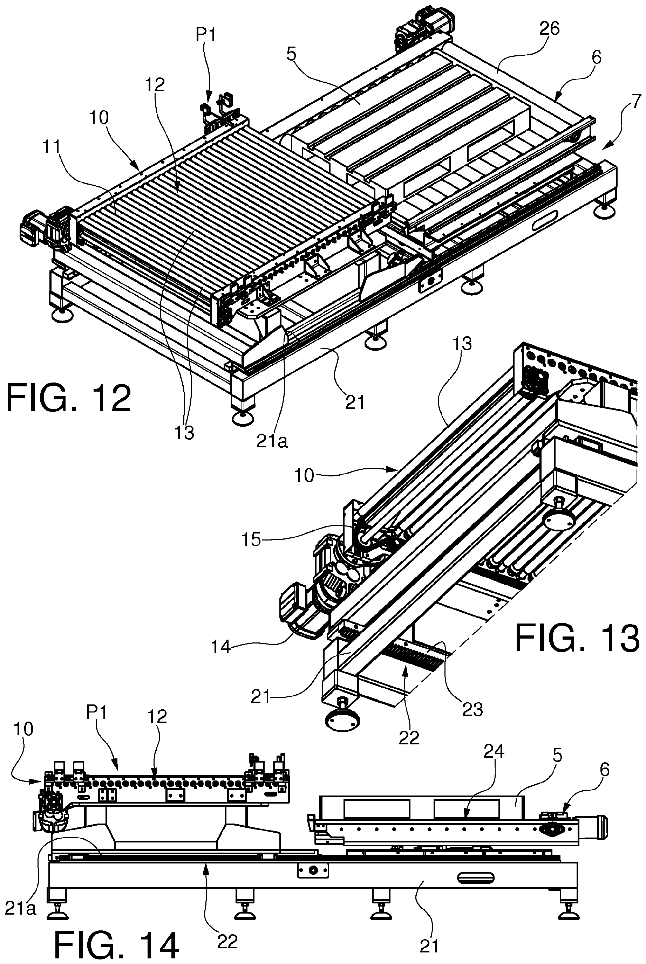

The device 1 also comprises deposit means, indicated as a whole with reference numeral 7, of the group 2 of products 3 on the pallet 5 (shown in the details of figures 12-14).

The device 1 also comprises at least one output unit 8 of the pallet 5, supporting the respective group 2 of products 3 deposited thereon.

The output unit 8 has the function of transferring the pallet 5, bearing the respective group 2 of products 3, to successive production stations; for example - and as shown schematically in the accompanying figures - a station immediately downstream of said output unit 8 may consist of a winding station 9 of the group 2 of products 3 with a polymeric film, or other packaging material.

According to an aspect of the invention, the deposit means 7 comprise at least one platform 10, suitable to support the group 2 of products 3.

This platform 10 is movable between a first position PI, in which it is not overlapped to the support 6, and a second position P2, in which it is at least partially overlapped to the support 6 bearing the respective pallet 5.

The platform 10 is configured so as to unload the group 2 of products 3 on the pallet 5 by fall as a result of the translation from the second position P2 to the first position P1.

According to another important aspect of the invention, the platform 10 comprises at least one roller conveyor 11 defining a first support surface 12 of the group 2 of products 3.

The presence of a first support surface 12 comprising rollers allows the platform 10 to be quickly translate - and thus removed - with respect to the base of the group 2 of products 3 (and therefore the platform 10 moves from said second position P2 to the first position P1) so that the group 2 of products 3 itself is placed on the pallet 5 falling from a minimum difference in height (in the order of a few centimeters, as will be better explained hereinafter).

The roller conveyor 11 comprises a plurality of short pitch rollers 13.

The rollers 13 are associated with at least one actuation unit 14, via at least one transmission 15.

The actuation unit 14 may consist of an electric motor; the transmission 15 may consist of a belt, a chain, or the like.

During the translation of the platform 10, the rollers 13 can rotate in the opposite direction to the movement of the platform 10 so as not to create stress between the groups of products that are unloaded and the containment shoulders.

They can also rotate at a slightly different speed from that of platform 10, creating, as needed, a compaction or expansion effect of the groups 2 of products 3. According to another aspect of the invention, the deposit means 7 comprise containment means 16.

The containment means 16 are suitable to selectively abut the lateral surfaces 2a, 2b of the group 2 of products 3 in the unloading/depositing step of the group 2 itself from the platform 10 to the pallet 5.

The containment means 16 may comprise at least two shoulders 17, 18, arranged at right angles with respect to each other, suitable to selectively abut two adjacent lateral surfaces 2a, 2b of the group 2 of products 3.

The containment means 16 may also be made by means of solutions different from the shoulders 17, 18, or they may comprise a single shoulder or even no shoulders, in the case of stable products or already wrapped by plastic film.

More in detail - and according to the invention illustrated in the figures - the containment means 16 comprise two pairs of shoulders 17, 17a, and 18, 18a, arranged two by two at right angles with respect to each other, and suitable to abut all the lateral surfaces 2a, 2b of the group 2 of products 3.

According to the invention, at least one pair of shoulders 17, 17a, or 18, 18a is associated with the operating end 19a, 20a of at least one respective robotic arm 19, 20.

This robotic arm 19, 20 may be replaced by manipulators, or other systems of a different type, suitable to perform the same function.

More particularly, the containment means 16 comprise a first robotic arm 19 and a second robotic arm 20.

The operating ends 19a, 20a of the first robotic arm 19 and of the second robotic arm 20 are associated to respective pairs of shoulders 17, 17a, and 18, 18a; as said, such pairs of shoulders 17, 17a, and 18, 18a are suitable to abut all the lateral surfaces 2a, 2b of the group 2 of products 3.

The shoulders 17, 17a and 18, 18a are arranged two by two at right angles with respect to each other.

From the operating point of view, the shoulders 17, 17a, and 18, 18a provide to laterally enclose the group 2 of products 3 in the step in which the group 2 itself is deposited, by fall, on the respective support 6, so as to prevent single products 3 from moving accidentally relative to their correct stacking positions.

More in general, the containment means 16 prevent the group 2 of products 3 from breaking up in some way, with respect to their correct configuration, during the deposit on the respective pallet 5.

In addition to this important function, the containment means 16 may also allow verification of the correct positioning of the products 3 within the group 2.

More particularly, due to the sophisticated actuation and control system of each robotic arm 19, 20 which carries the respective shoulders 17, 17a, and 18, 18a, the containment means 16 are capable of detecting whether there are any wrongly positioned products 3: this detection may be carried out by means of checks on the position actually taken by the operating end 19a, 20a of the robotic arm 19, 20 with respect to a reference position, or with reference to the actual mechanical resistance that each robotic arm 19, 20 encounters in its approach to the lateral surfaces 2a, 2b of the group 2 of products 3.

In the event that the containment means 16 detect an incorrect positioning of one or more products 3, an alarm signal may be generated which, in the most critical cases, may also cause the device 1 to stop to request the intervention by an operator.

In an embodiment of the invention, the shoulders 17, 17a, and 18, 18a of the containment means 16 may comprise - or consist of - movable elements which can move - even automatically - in such a way as to adapt to groups 2 of products 3 of different shapes and/or dimensions.

In another embodiment of the invention, the shoulders 17, 17a, and 18, 18a of the containment means 16 may be substantially shaped like a comb: this solution allows the same shoulders 17, 17a, and 18, 18a, when they are in a position of abutment on the lateral surfaces 2a, 2b of the group 2 of products 3, to mutually interpenetrate in such a way as to adapt to groups 2 of products 3 of different shapes and/or dimensions.

The platform 10 is associated with a frame 21; the frame 21 is positioned downstream of the supply means 4, with reference to the advancement direction A of the groups 2 of products 3.

The advancement direction A is defined by the supply means 4 themselves (figure 1). The deposit means 7 comprise translational members 22 of the platform 10, between the first position P1 and the second position P2, and vice versa.

In particular, the translation of the platform 10 takes place along an advancement direction A of the groups 2 of products 3.

In other embodiments of the invention, however, the translation of the platform 10 from the first position P1 to the second position P2, and vice versa, may take place in a different direction, for example a direction perpendicular to said advancement direction A.

The translational members 22 are associated with the frame 21 of the platform 10. The translational members 22 may comprise an electric motor to which a pinion-rack type mechanism is coupled, in turn associated to the platform 10 (in the detail in figure 13, in particular, the rack 23 is visible).

More generally, the translational members 22 may be of any type suitable to generate a movement of the platform 10 from the second position P2 to the first position PI, so as to allow the group 2 of products 3 to be deposited on the support 5.

The displacement of the platform 10 may be facilitated by a suitable rotary motion imparted - through the actuation unit 14 - to the small pitch rollers 13, so as to prevent any sliding between the surfaces of the parts involved.

The translation of the platform 10 is also made possible by the presence of special ball guides 21a, provided in the frame 21.

The support 6 comprises a second surface 24 for supporting the pallet 5.

According to another aspect of the invention, the second surface 24 is associated with lifting means 25 from an inactive lower position to a higher position; in the latter upper position, the pallet 5 is at a predetermined unload distance from the platform 10 (i.e. from the first surface 12 thereof) when the latter is in the respective second position P2.

The second surface 24 of the support 6 is defined by motorized rollers 26.

The motorized rollers 26 of the support 6 are in communication with the output unit 8 so that, once the group 2 of products 3 has been placed on the pallet 5, the latter can be transported directly outside the device 1, towards a subsequent production station. The support 6 may be associated with the same frame 21 which supports the platform 10.

The lifting means 25 of the second surface 24 of the support 6 may comprise, for example, an electric actuator 27, fixed to the frame 21, to which a crank mechanism 27a is associated, which transforms the rotary motion of the electric actuator 27 into a vertical translational motion of the second surface 24.

The lifting means 25 may be of any other type or configuration suitable to obtain the desired vertical translation of the second surface 24.

The vertical translation of the second surface 24, when the pallet 5 is thereon, has the purpose of bringing the pallet 5 as close as possible to the platform 10, so that the subsequent deposition of the group 2 of products 3 on the pallet 5 takes place by falling from a very small difference in height (to a maximum of a few centimeters). This lifting step is necessary because, in the step in which the platform 10 moves from the first position P1 to the second position P2 with the group 2 of products 3 resting on the first surface 12, the pallet 5 must be sufficiently far from the same to prevent accidental shocks that could, in fact, move the pallet 5, thereby leaving it in an incorrect position not suitable to receive the group 2 of products 3.

In order to prevent these absolutely unpleasant and harmful situations, the support 6 may be provided with means for locking the pallet 5 in the correct deposit position of the group 2 of products 3.

Such locking means may comprise, for example, side rails which, at the moment of deposition of the group 2 of products 3, approach the sides of the pallet 5 so as to prevent any unwanted displacement.

In relation to the features of the output unit 8, after the group 2 of products 3 has been deposited on the pallet 5, the second surface 24 can be returned to the inactive lower position (by the lifting means 25), or it may remain in the upper position, if this is compatible with the subsequent transfer of the pallet 5, with the group 2 of products 3, on the output unit 8 (i.e. it is at the same height as the rollers of the output unit 8). According to another aspect of the invention, the device comprises at least one robotic manipulator 28 for picking up a pallet 5 from a respective warehouse and for depositing it on the support 6.

The robotic manipulator 28 may be of an anthropomorphic type, or of another type. For example, a traditional pallet de-stacker may be used together with a pusher to bring the pallet to the required position.

More in detail, the robotic manipulator 28 comprises, at its operating end, at least one grip clamp 29.

The grip clamp 29 may, for example, be of the hook type, particularly suitable to engage/disengage the sides of the pallet 5.

The supply means 4 comprise a plurality of conveyor belts 30, 31, arranged in series one after the other along the advancement direction A of the groups 2 of products 3.

As an alternative to conveyor belts, roller conveyors may be used.

Said conveyor belts 30,31 are provided with respective independent actuation means 32: due to this feature, it is possible to implement a sort of "buffer" function, which compensates for any differences in the operating times between the feeding of the various groups 2 of products 3 and the working steps of the device 1.

In the embodiment shown in the figures, in particular, the supply means comprise a first conveyor belt 30 and a second conveyor belt 31, arranged in series one after the other.

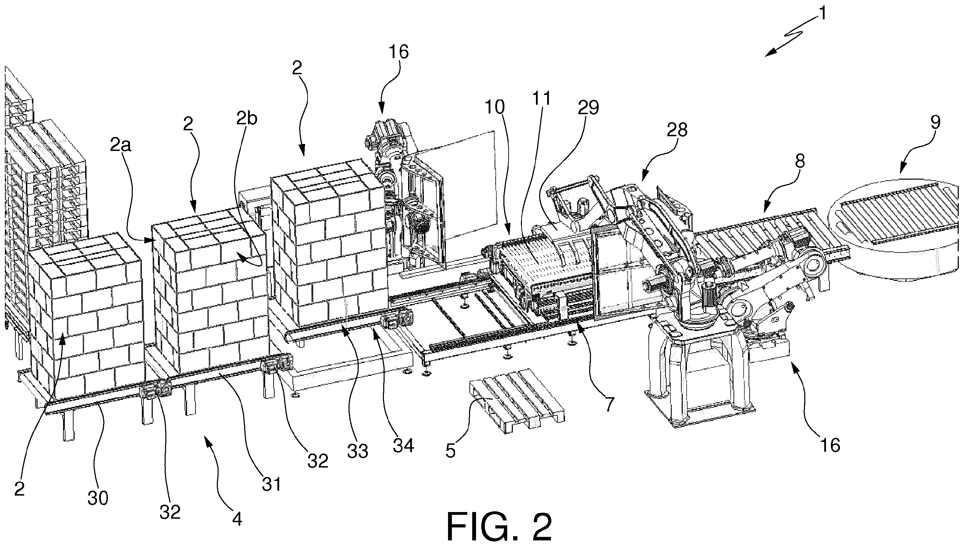

The supply means 4 further comprise a terminal conveyor belt 33, arranged downstream of said plurality of conveyor belts 30, 31 along the advancement direction A (that is, in this specific case, downstream of the second conveyor belt 31). The terminal conveyor belt 33 comprises lifting members 34 from a lower transport position (i.e., the one shown in figure 1) to a higher transfer position of each group 2 of products 3 on the platform 10 (i.e. the one shown in figure 2).

The lifting of the group 2 of products 3 operated by the terminal conveyor belt 33 is however totally optional in the device according to the present invention, and it responds to the need to reconcile different operating heights (i.e. heights from the ground) of the various means and groups operating in the production site.

For example, in the case of the particular embodiment shown in the figures, the vehicles carrying the groups 2 of products 3 towards the supply means 4 of the device 1 operate at a different height (in particular, a lower height) than that at which the platform 10 is (which, as clarified, must be able to freely move above the pallet 5 positioned on the support 6).

There may also be application situations in which the groups 2 of products 3 are transported at the same height from the ground with respect to that at which the platform 10 moves.

The supply means 4 may also comprise dimensional and/or shape control means 4a of each group 2 of products 3, to verify that the group 2 does not contain wrongly positioned products 3.

For example, such dimensional control means 4a may be associated with the terminal conveyor belt 33, so as to exploit the lifting of the group 2 of products 3 to detect any dimensional or shape variations (for example with a series of photocells).

The operation of the device 1 according to the invention is as follows.

The groups 2 of products 3 (transported for example by vehicles) reach the supply means 4, and they are placed one after the other on the first conveyor belt 30.

Each group 2, therefore, is transferred from the first conveyor belt 30 to the second conveyor belt 31, and from there to the terminal conveyor belt 33.

In this regard, and according to a further aspect of the present invention, the groups 2 of products 3 may be transferred, through the conveyor belts 30, 31 to the terminal conveyor belt 33, with the sides not parallel with the advancement direction A, but rather inclined by a certain predetermined angle.

This arrangement has the effect of ensuring a more gradual and progressive transfer of the group 2 of products 3 through the conveyor belts 30, 31, 33, so as to limit the risk that one or more products 3 may accidentally move with respect to the correct stacking configuration.

Necessarily, this arrangement is also carried out, respectively, upstream and downstream of the conveyors 30, 31, 33, that is, on the vehicle which carries the group 2 on the first conveyor belt 30 and on the roller conveyor 11 downstream of the terminal conveyor belt 33.

Consequently, also in the subsequent deposit on pallet 5, the group 2 retains said inclination with respect to the advancement direction A: the pallet 5 must therefore also be positioned, by the robotic manipulator 28, with the same inclination with respect to the advancement direction A.

Therefore, once the group 2 of products 3 is on the terminal conveyor belt 33, the latter (if necessary) is lifted and brought to the same height as the roller conveyor 11 of the platform 10 (see figure 2).

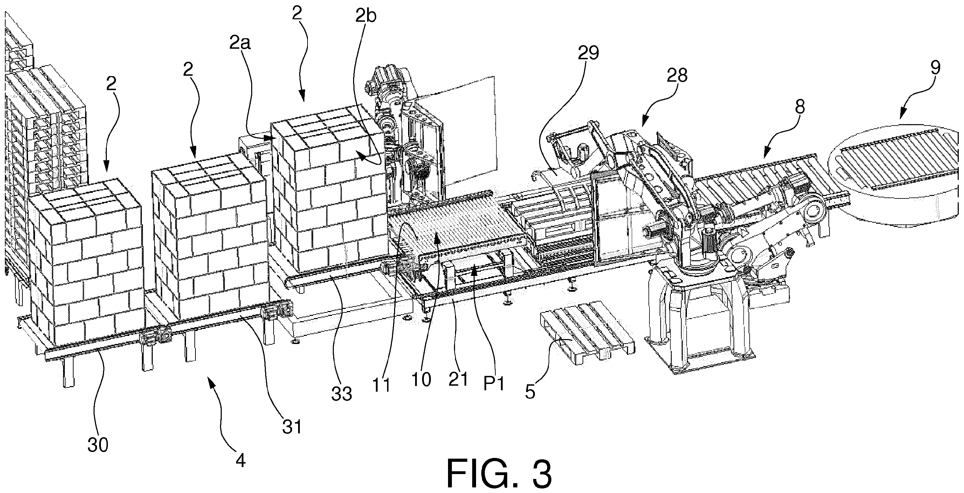

The platform 10 is brought to the first position PI, waiting to receive the group 2 of products 3 (figure 3).

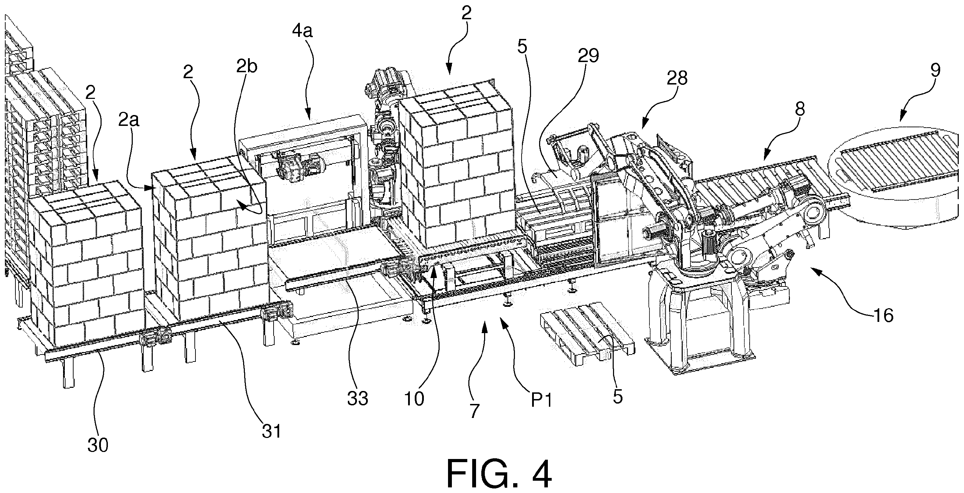

The group 2 then moves from the terminal conveyor belt 33 to the roller conveyor 11 (figure 4).

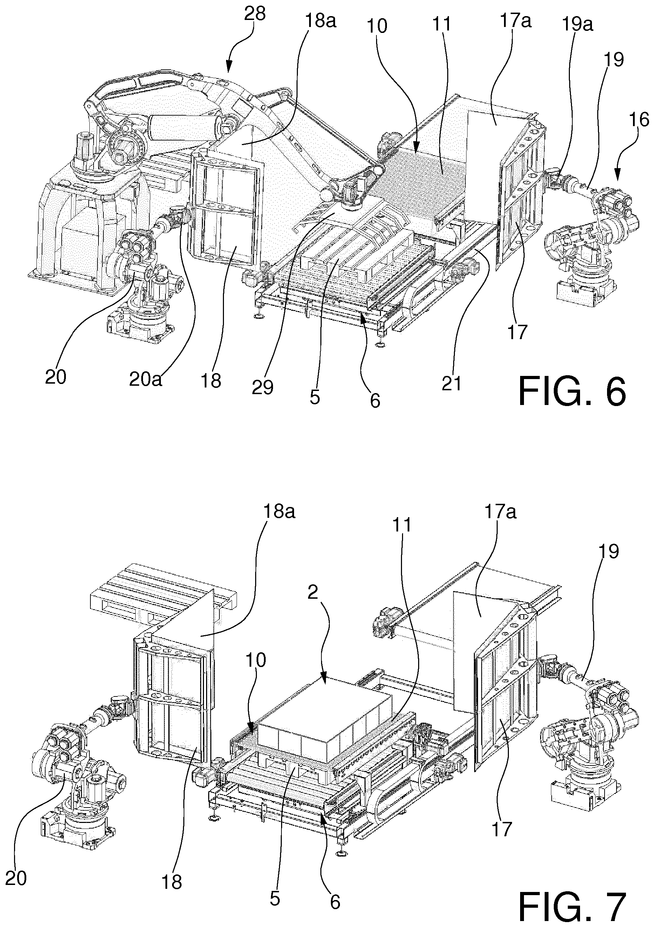

In the meantime, the manipulator 28 positions a pallet 5 on the second surface 24 of the support 6, see figure 6 (possibly with the inclination, with respect to the advancement direction A, as mentioned above).

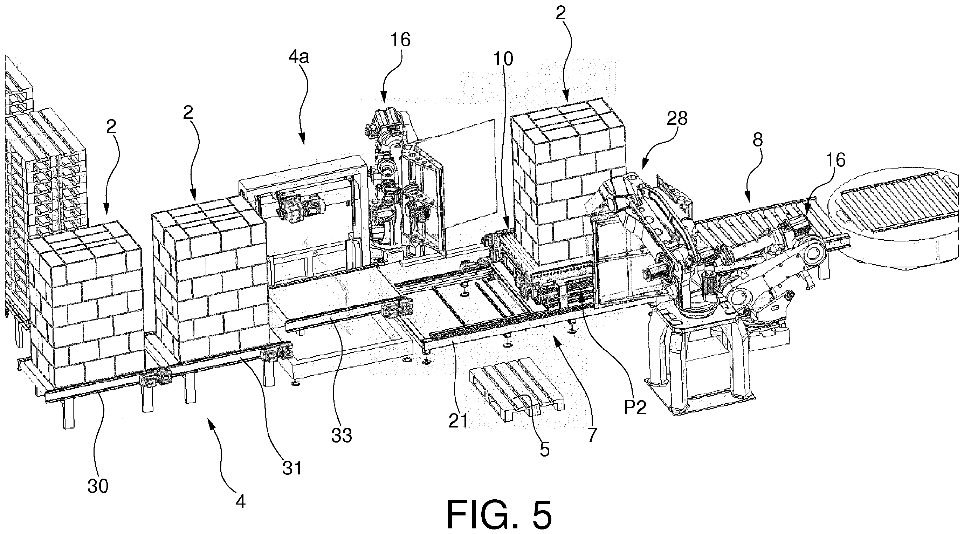

Subsequently, the platform 10, bearing the group 2, is translated from the first position P1 to the second position P2, that is, overlapped to the support 6 (as shown in figures 5 and 7).

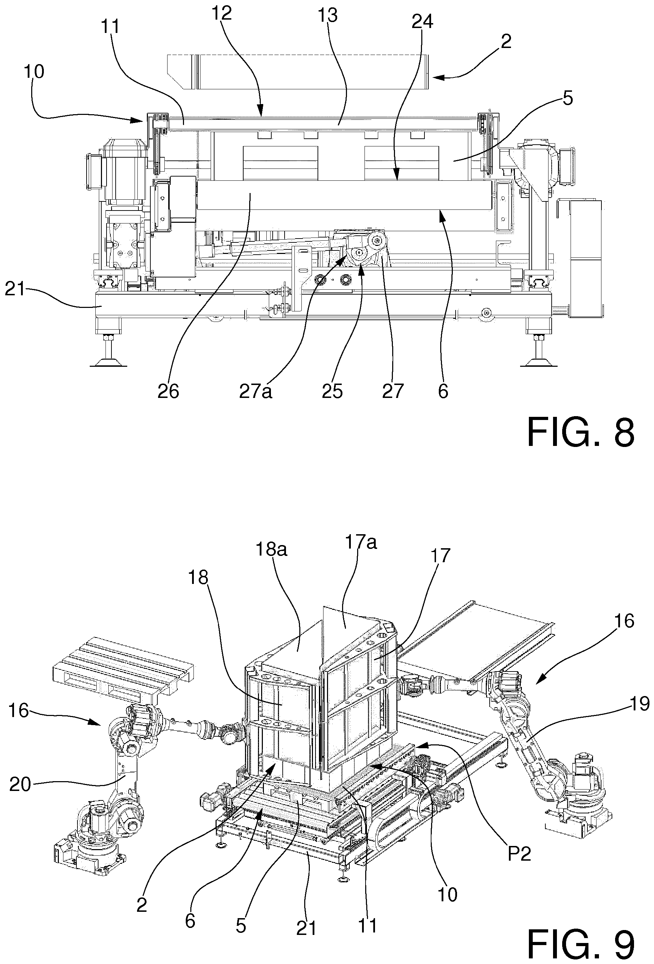

At this point, the lifting means 25 of the second surface 24 are operated, which raise the pallet 5 to a predetermined unloading distance from the roller conveyor 11 (i.e. from the first surface 12 on which the group 2 of products 3 rests); this step is shown in figure 8.

In preparation for the subsequent depositing step of the group 2 of products 3, the containment means 16 are brought to abut against the lateral surfaces 2a, 2b of the group 2 itself (figure 9).

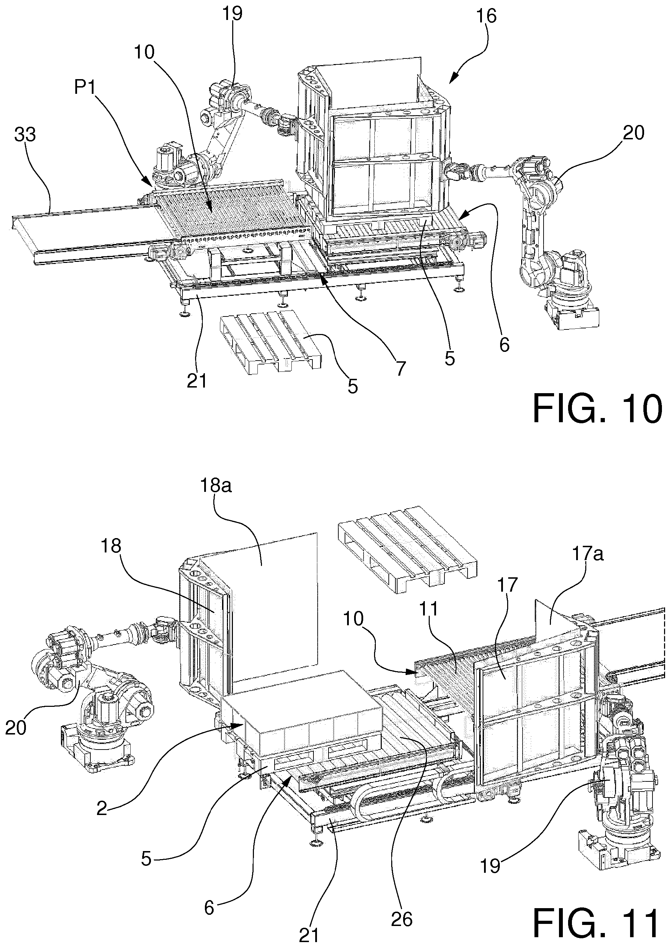

As a result of this, the translational members 22 of the platform 10 are actuated, which move the latter from the second position P2 to the first position P1 (figure 10).

The group 2 of products 3 is thus deposited on the pallet 5; the minimum difference in level, as well as the speed - where possible - of the translation step of the platform 10, ensure that there are no accidental movements of the products 3 with respect to each other within group 2.

If necessary, by means of the lifting members 25, the pallet 5 is returned to the initial lower position, which is at the same height as the rollers of the output unit 8.

After moving the containment means 16 away again, the pallet 5, bearing the group 2 of products 3, can then be expelled from the device 1 through the output unit 8, to continue towards the subsequent production stations 9 (figure 11).

The object of the present invention is also a method for loading a group of products on a pallet.

The method according to the invention comprises a step of providing supply means 4 of a group 2 of products 3, and a step of providing a support 6 for a pallet 5 on which said group 2 of products 3 is intended to be deposited.

The method further comprises a step of providing deposit means 7 of the group 2 of products 3 from the supply means 4 on the pallet 5; said deposit means 7 comprise at least one platform 10 suitable to support the group 2 of products 3.

According to the invention, the method comprises a step of translating the platform 10 from a first position PI, in which it is not overlapped to the support 6, to a second position P2, in which it is at least partially overlapped to the support 6 carrying the pallet 5, and a subsequent step of translating the platform 10 from the second position P2 to the first position PI, so as to unload the group 2 of products 3 on the pallet 5 by fall.

The method also comprises a step of containing the lateral surfaces 2a, 2b of the group 2 of products 3 during the unloading of the group 2 itself on the pallet 5, by fall.

More particularly, this step consists in laterally enclosing the group 2 of products 3 in the step in which the group 2 itself is deposited, by fall, on the respective support 6, so as to prevent single products 3 from moving accidentally with respect to their correct stacking positions.

The step of containing the group 2 of products 3 is implemented, more in detail, by providing containment means 16 comprising a first robotic arm 19 and a second robotic arm 20.

The operating ends 19a, 20a of the first robotic arm 19 and of the second robotic arm 20 are associated to respective pairs of shoulders 17, 17a, 18, 18a, suitable to abut all the lateral surfaces 2a, 2b of the group 2 of products 3.

It has thus been seen that the invention achieves the intended objects.

Each group 2 of products 3, arranged in an area of the site subject to restrictions from the hygienic point of view, is efficiently and quickly positioned on a respective pallet 5 outside said area, so that there is no contamination by the pallet 5 itself.

This result is achieved through a constructively simple, cost-effective and versatile technical solution.

Moreover, the present solution, when compared with other already existing devices, is particularly effective as regards the maintenance of the correct configuration of the group 2 of products 3, preventing the single products 3 from positioning themselves incorrectly during the transfer onto the pallet 5.

The present invention has been described according to preferred embodiments, but equivalent versions may be conceived without departing from the scope of protection offered by the following claims.

## Claims

1. Device (1) for loading a group of products on a pallet, comprising supply means (4) of a group (2) of products (3),
at least one support (6) for a pallet (5) on which said group (2) of products (3) is intended to be deposited,
deposit means (7) of said group (2) of products (3) from said supply means (4) on said pallet (5), and
at least one output unit (8) of said pallet (5) bearing said group (2) of products (3),
said deposit means (7) comprising at least one platform (10) suitable to support said group (2) of products (3), movable between a first position (P1), in which it is not overlapping said support (6), and a second position (P2) in which it is at least partially overlapping said support (6) bearing said pallet (5), said platform (10) being configured so as to unload said group (2) of products (3) on said pallet (5) by fall following the translation from said second position (P2) to said first position (P1),
said deposit means (7) comprising translational members (22) of said platform (10), between said first position (P1) and said second position (P2), and vice versa, along an advancement direction (A) of the groups (2) of products (3), defined by said supply means (4),
said deposit means (7) comprising containment means (16) configured to abut selectively the lateral surfaces (2a, 2b) of said group (2) of products (3) during the unloading step of said group (2) from said platform (10) to said pallet (5),
**characterized in that** said containment means (16) comprise a first robotic arm (19) and a second robotic arm (20), at the operating ends (19a, 20a) of which respective pairs of shoulders (17, 17a, 18, 18a) are associated, configured to abut on every lateral surface (2a, 2b) of said group (2) of products (3), said pairs of shoulders (17,17a,18,18a) being arranged two by two at right angles with respect to each other.

2. Device according to claim 1, wherein said translational members (22) comprise an electric motor to which a pinion-rack type mechanism (23) is associated, said mechanism being, in turn, associated with said platform (10).

3. Device according to one of the preceding claims, wherein said platform (10) comprises at least one roller conveyor (11) with rollers (13) defining a first support surface (12) of said group (2) of products (3).

4. Device according to claim 3, wherein said support (6) comprises a second surface (24) for supporting said pallet (5), said second surface (24) being associated with lifting means (25) from an inactive lower position to a higher position where said pallet (5) is at a predetermined unload distance from said platform (10) when said platform (10) is positioned in said second position (P2).

5. Device according to one of the preceding claims, comprising at least one robotic manipulator (28) suitable for picking up a pallet (5) from a respective warehouse and for depositing it on said support (6).

6. Device according to claim 5, wherein said robotic manipulator (28) comprises, at its operating end, at least one grip clamp (29) of the hook type.

7. Device according to one of the preceding claims, wherein said supply means (4) comprise a plurality of conveyor belts (30, 31) arranged in series one after the other along an advancement direction (A) of the groups (2) of products (3), provided with respective independent actuation means (32).

8. Device according to claim 7, wherein said supply means (4) comprise a terminal conveyor belt (33) disposed downstream of said plurality of conveyor belts (30,31) along said advancement direction (A), provided with lifting members (34) from a lower transport position to a higher transfer position of each group (2) of products (3) on said platform (10).

9. Device according to one of the preceding claims, wherein said supply means (4) comprise dimensional and/or shape control means (4a) of each group (2) of products (3) to check that said group (2) does not contain badly positioned products (3).

10. Method for loading a group of products on a pallet, comprising the steps of providing supply means (4) of a group (2) of products (3),
providing a support (6) for a pallet (5) on which said group (2) of products (3) is intended to be deposited,
providing deposit means (7) of said group (2) of products (3), from said supply means (4) on said pallet (5), comprising at least one platform (10) suitable to support said group (2) of products (3), wherein said deposit means (7) comprise translational members (22) of said platform (10), between said first position (P1) and said second position (P2), and vice versa, along an advancement direction (A) of the groups of products (3), defined by said supply means (4),
translating said platform (10) from a first position (P1), in which it is not overlapping said support (6), to a second position (P2), in which it is at least partially overlapping said support (6) bearing said pallet (5), and a following step of translating said platform (10) from said second position (P2) to said first position (P1), so as to unload said group (2) of products (3) on said pallet (5) by fall, and
containing the lateral surfaces (2a, 2b) of the group (2) of products (3) during the unloading of the group (2) itself on the pallet (5) by fall, so as to prevent single products (3) from moving accidentally with respect to their correct stacking positions,
**characterized in that** said step of containing the lateral surfaces (2a, 2b) of the group (2) of products (3) comprise a step of providing containment means (16) comprising a first robotic arm (19) and a second robotic arm (20), at the operating ends (19a, 20a) of which respective pairs of shoulders (17, 17a, 18, 18a) are associated, configured to abut on every lateral surface (2a, 2b) of said group (2) of products (3), said pairs of shoulders (17,17a,18,18a) being arranged two by two at right angles with respect to each other.

11. Method according to claim 10, wherein said deposit means (7) comprise translational members (22) of said platform (10), between said first position (P1) and said second position (P2), and vice versa, along an advancement direction (A) of the groups (2) of products (3), defined by said supply means (4).

12. Method according to one of claims 10,11, wherein said platform (10) comprises at least one roller conveyor (11) with rollers (13) defining a first support surface (12) of said group (2) of products (3).

13. Method according to one of claims 10-12, wherein on said supply means (4), on said platform (10) and on said pallet (5), said group (2) of products (3) is transferred with the sides being non-parallel to the advancement direction (A), but inclined at a certain predetermined angle.

## Patentansprüche

1. Vorrichtung (1) zum Laden einer Gruppe von Produkten auf eine Palette, umfassend
Zuführmittel (4) einer Gruppe (2) von Produkten (3), mindestens einen Träger (6) für eine Palette (5), auf der die besagte Gruppe (2) von Produkten (3) abgelegt werden soll,
Ablegemittel (7) der besagten Gruppe (2) von Produkten (3) von den besagten Zuführmitteln (4) auf die besagte Palette (5), und
mindestens eine Ausgabeeinheit (8) der besagten Palette (5), die die besagte Gruppe (2) von Produkten (3) trägt,
wobei die besagten Ablegemittel (7) mindestens eine Plattform (10) umfassen, die geeignet ist, die besagte Gruppe (2) von Produkten (3) zu tragen, die zwischen einer ersten Position (P1), in der sie den besagten Träger (6) nicht überlappt, und einer zweiten Position (P2), in der sie den besagten Träger (6), der die besagte Palette (5) trägt, mindestens teilweise überlappt, bewegbar ist, wobei die besagte Plattform (10) so konfiguriert ist, dass sie die besagte Gruppe (2) von Produkten (3) auf die besagte Palette (5) durch Fall, der Verschiebung von der besagten zweiten Position (P2) in die besagte erste Position (P1) folgend, entlädt,
wobei die besagten Ablegemittel (7) Verschiebungselemente (22) der besagten Plattform (10) zwischen der besagten ersten Position (P1) und der besagten zweiten Position (P2) und umgekehrt entlang einer Vorschubrichtung (A) der Gruppen (2) von Produkten (3), die durch die besagten Zuführmittel (4) definiert ist, umfassen,
wobei die besagten Ablegemittel (7) Aufnahmemittel (16) umfassen, die konfiguriert sind, um selektiv an den Seitenflächen (2a, 2b) der besagten Gruppe (2) von Produkten (3) während des Entladeschritts der besagten Gruppe (2) von der besagten Plattform (10) auf die besagte Palette (5) anzuliegen,
**dadurch gekennzeichnet, dass** die besagten Aufnahmemittel (16) einen ersten Roboterarm (19) und einen zweiten Roboterarm (20) umfassen, an deren Betätigungsenden (19a, 20a) jeweilige Paare von Schultern (17, 17a, 18, 18a) zugeordnet sind, die konfiguriert sind, um an jeder Seitenfläche (2a, 2b) der besagten Gruppe (2) von Produkten (3) anzuliegen, wobei die besagten Paare von Schultern (17, 17a, 18, 18a) paarweise im rechten Winkel zueinander angeordnet sind.

2. Vorrichtung nach Anspruch 1, worin die besagten Verschiebungselemente (22) einen Elektromotor umfassen, dem ein Ritzel-Zahnstangentyp-Mechanismus (23) zugeordnet ist, wobei der besagte Mechanismus wiederum der besagten Plattform (10) zugeordnet ist.

3. Vorrichtung nach einem der vorangegangenen Ansprüche, worin die besagte Plattform (10) mindestens einen Rollenförderer (11) mit Rollen (13), die eine erste Tragfläche (12) der besagten Gruppe (2) von Produkten (3) definieren, umfasst.

4. Vorrichtung nach Anspruch 3, worin der besagte Träger (6) eine zweite Fläche (24) zum Tragen der besagten Palette (5) umfasst, wobei die besagte zweite Fläche (24) Hebemitteln (25) von einer inaktiven unteren Position zu einer höheren Position zugeordnet ist, in der sich die besagte Palette (5) in einem vorgegebenen Entladeabstand von der besagten Plattform (10) befindet, wenn die besagte Plattform (10) in der besagten zweiten Position (P2) positioniert ist.

5. Vorrichtung nach einem der vorangegangenen Ansprüche, umfassend mindestens einen Roboter-Manipulator (28), der zum Aufnehmen einer Palette (5) aus einem entsprechenden Lager aufzunehmen und ihrem Ablegen auf dem besagten Träger (6) geeignet ist.

6. Vorrichtung nach Anspruch 5, worin der besagte Roboter-Manipulator (28) an seinem Betätigungsende mindestens eine Greifklemme (29) des Hakentyps umfasst.

7. Vorrichtung nach einem der vorangegangenen Ansprüche, worin die besagten Zuführmittel (4) eine Vielzahl von Förderbändern (30, 31), angeordnet in Reihe hintereinander entlang einer Vorschubrichtung (A) der Gruppen (2) von Produkten (3), versehen mit jeweiligen unabhängigen Betätigungsmitteln (32), umfassen.

8. Vorrichtung nach Anspruch 7, worin die besagten Zuführmittel (4) ein Endförderband (33), stromabwärts der besagten Vielzahl von Förderbändern (30, 31) entlang der besagten Vorschubrichtung (A) angeordnet, versehen mit Hebeelementen (34) von einer unteren Transportposition zu einer höheren Übergabeposition jeder Gruppe (2) von Produkten (3) auf der besagten Plattform (10) umfassen.

9. Vorrichtung nach einem der vorangegangenen Ansprüche, worin die besagten Zuführmittel (4) Mittel zur Dimensions- und/oder Formkontrolle jeder Gruppe (2) von Produkten (3) umfassen, um sicherzustellen, dass die besagte Gruppe (2) keine schlecht positionierten Produkte (3) enthält.

10. Verfahren zum Laden einer Gruppe von Produkten auf eine Palette, umfassend die Schritte des Bereitstellens von Zuführmitteln (4) einer Gruppe (2) von Produkten (3),
Bereitstellens eines Trägers (6) für eine Palette (5), auf der die besagte Gruppe (2) von Produkten (3) abgelegt werden soll,
Bereitstellens von Ablegemitteln (7) der besagten Gruppe (2) von Produkten (3) von den besagten Zuführmitteln (4) auf die besagte Palette (5), umfassend mindestens eine Plattform (10), die geeignet ist, die besagte Gruppe (2) von Produkten (3) zu tragen, worin die besagten Ablegemittel (7) Verschiebungselemente (22) der besagten Plattform (10) zwischen der besagten ersten Position (P1) und der besagten zweiten Position (P2) und umgekehrt entlang einer Vorschubrichtung (A) der Gruppen von Produkten (3), die durch die besagten Zuführmittel (4) definiert ist, umfassen,
Verschiebens der besagten Plattform (10) von einer ersten Position (P1), in der sie den besagten Träger (6) nicht überlappt, in eine zweite Position (P2), in der sie den besagten Träger (6), der die besagte Palette (5) trägt, mindestens teilweise überlappt, und eines folgenden Schrittes des Verschiebens der besagten Plattform (10) von der besagten zweiten Position (P2) zu der besagten ersten Position (P1), um die besagte Gruppe (2) von Produkten (3) durch Fall auf die besagte Palette (5) zu entladen, und
Aufnehmens der Seitenflächen (2a, 2b) der Gruppe (2) von Produkten (3) während des Entladens der Gruppe (2) selbst auf die Palette (5) durch Fall, um zu verhindern, dass sich einzelne Produkte (3) versehentlich in Bezug auf ihre korrekte Stapelposition bewegen,
**dadurch gekennzeichnet, dass** der besagte Schritt des Aufnehmens der Seitenflächen (2a, 2b) der Gruppe (2) von Produkten (3) einen Schritt des Bereitstellens von Aufnahmemitteln (16), umfassend einen ersten Roboterarm (19) und einen zweiten Roboterarm (20) umfassen, an deren Betätigungsenden (19a, 20a) jeweilige Paare von Schultern (17, 17a, 18, 18a) zugeordnet sind, die konfiguriert sind, um an jeder Seitenfläche (2a, 2b) der besagten Gruppe (2) von Produkten (3) anzuliegen, wobei die besagten Paare von Schultern (17, 17a, 18, 18a) paarweise im rechten Winkel zueinander angeordnet sind.

11. Verfahren nach Anspruch 10, worin die besagten Ablegemittel (7) Verschiebungselemente (22) der besagten Plattform (10) zwischen der besagten ersten Position (P1) und der besagten zweiten Position (P2) und umgekehrt entlang einer Vorschubrichtung (A) der Gruppen (2) von Produkten (3), die durch die besagten Zuführmittel (4) definiert ist, umfassen.

12. Verfahren nach einem der Ansprüche 10, 11, worin die besagte Plattform (10) mindestens einen Rollenförderer (11) mit Rollen (13), die eine erste Tragfläche (12) der besagten Gruppe (2) von Produkten (3) definieren, umfasst.

13. Verfahren nach einem der Ansprüche 10-12, worin auf den besagten Zuführmitteln (4), auf der besagten Plattform (10) und auf der besagten Palette (5) die Gruppe (2) von Produkten (3) mit nicht parallel zur Vorschubrichtung (A) befindlichen, aber in einem bestimmten vorgegebenen Winkel geneigten Seiten übergeben wird.

## Revendications

1. Dispositif (1) pour charger un groupe de produits sur une palette, comprenant
des moyens d'approvisionnement (4) d'un groupe (2) de produits (3),
au moins un support (6) pour une palette (5) sur laquelle ledit groupe (2) de produits (3) est destiné à être déposé,
des moyens de dépôt (7) dudit groupe (2) de produits (3) provenant desdits moyens d'approvisionnement (4) sur ladite palette (5), et
au moins une unité de sortie (8) de ladite palette (5) portant ledit groupe (2) de produits (3),
lesdits moyens de dépôt (7) comprenant au moins une plate-forme (10) adaptée pour supporter ledit groupe (2) de produits (3), mobile entre une première position (P1), dans laquelle elle ne chevauche pas ledit support (6), et une deuxième position (P2) dans laquelle elle chevauche au moins partiellement ledit support (6) portant ladite palette (5), ladite plate-forme (10) étant configurée de façon à décharger ledit groupe (2) de produits (3) sur ladite palette (5) par une chute après la translation de ladite deuxième position (P2) à ladite première position (P1),
lesdits moyens de dépôt (7) comprenant des éléments de translation (22) de ladite plate-forme (10), entre ladite première position (P1) et ladite deuxième position (P2), et vice-versa, le long d'une direction d'avancée (A) des groupes (2) de produits (3), définie par lesdits moyens d'approvisionnement (4),
lesdits moyens de dépôt (7) comprenant des moyens de confinement (16) configurés pour entrer en butée sélectivement avec les surfaces latérales (2a, 2b) dudit groupe (2) de produits (3) pendant l'étape de déchargement dudit groupe (2) de ladite plate-forme (10) à ladite palette (5),
**caractérisé en ce que** lesdits moyens de confinement (16) comprennent un premier bras robotisé (19) et un deuxième bras robotisé (20), aux extrémités opérationnelles (19a, 20a) dont les paires d'épaulements (17, 17a, 18, 18a) respectives sont associées, configurés pour entrer en butée sur chaque surface latérale (2a, 2b) dudit groupe (2) de produits (3), lesdites paires d'épaulements (17, 17a, 18, 18a) étant agencées deux par deux à angles droits les unes par rapport aux autres.

2. Dispositif selon la revendication 1, dans lequel lesdits éléments de translation (22) comprennent un moteur électrique auquel un mécanisme à crémaillère (23) est associé, ledit mécanisme étant, à son tour, associé à ladite plate-forme (10).

3. Dispositif selon l'une des revendications précédentes, dans lequel ladite plate-forme (10) comprend au moins un transporteur à rouleaux (11) avec des rouleaux (13) définissant une première surface de support (12) dudit groupe (2) de produits (3).

4. Dispositif selon la revendication 3, dans lequel ledit support (6) comprend une deuxième surface (24) pour supporter ladite palette (5), ladite deuxième surface (24) étant associée à des moyens de levage (25) d'une position inférieure inactive à une position supérieure dans laquelle ladite palette (5) est à une distance de déchargement prédéterminée de ladite plate-forme (10) quand ladite plate-forme (10) est positionnée dans ladite deuxième position (P2).

5. Dispositif selon l'une des revendications précédentes, comprenant au moins un manipulateur robotisé (28) adapté pour prélever une palette (5) dans un dépôt respectif et pour la déposer sur ledit support (6).

6. Dispositif selon la revendication 5, dans lequel ledit manipulateur robotisé (28) comprend, à son extrémité opérationnelle, au moins une pince de serrage (29) de type crochet.

7. Dispositif selon l'une des revendications précédentes, dans lequel lesdits moyens d'approvisionnement (4) comprennent une pluralité de bandes transporteuses (30, 31) agencées en série l'une après l'autre dans une direction d'avancée (A) des groupes (2) de produits (3), dotées de moyens d'actionnement (32) indépendants respectifs.

8. Dispositif selon la revendication 7, dans lequel lesdits moyens d'approvisionnement (4) comprennent une bande transporteuse d'extrémité (33) disposée en aval de ladite pluralité de bandes transporteuses (30, 31) le long de ladite direction d'avancée (A), dotée d'éléments de levage (34) d'une position de transport inférieure à une position de transfert supérieure de chaque groupe (2) de produits (3) sur ladite plate-forme (10).

9. Dispositif selon l'une des revendications précédentes, dans lequel lesdits moyens d'approvisionnement (4) comprennent des moyens de contrôle de dimension et/ou de forme (4a) de chaque groupe (2) de produits (3) pour vérifier que ledit groupe (2) ne contient pas de produits (3) mal positionnés.

10. Procédé pour charger un groupe de produits sur une palette, comprenant les étapes consistant à fournir des moyens d'approvisionnement (4) d'un groupe (2) de produits (3),
fournir un support (6) pour une palette (5) sur laquelle ledit groupe (2) de produits (3) est destiné à être déposé,
fournir des moyens de dépôt (7) dudit groupe (2) de produits (3), depuis lesdits moyens d'approvisionnement (4) sur ladite palette (5), comprenant au moins une plate-forme (10) adaptée pour supporter ledit groupe (2) de produits (3), dans lequel lesdits moyens de dépôt (7) comprennent des éléments de translation (22) de ladite plate-forme (10), entre ladite première position (P1) et ladite deuxième position (P2), et vice-versa, le long d'une direction d'avancée (A) des groupes de produits (3), définie par lesdits moyens d'approvisionnement (4), déplacer en translation ladite plate-forme (10) d'une première position (P1), dans laquelle elle ne chevauche pas ledit support (6), à une deuxième position (P2), dans laquelle elle chevauche au moins partiellement ledit support (6) portant ladite palette (5), et une étape suivante de déplacement en translation de ladite plate-forme (10) de ladite deuxième position (P2) à ladite première position (P1), de façon à décharger ledit groupe (2) de produits (3) sur ladite palette (5) par une chute, et
confiner les surfaces latérales (2a, 2b) du groupe (2) de produits (3) pendant le déchargement du groupe (2) sur la palette (5) par une chute, afin d'empêcher les produits (3) individuels de se déplacer accidentellement par rapport à leurs positions correctes d'empilement, **caractérisé en ce que** ladite étape de confinement des surfaces latérales (2a, 2b) du groupe (2) de produits (3) comprend une étape de fourniture de moyens de confinement (16) comprenant un premier bras robotisé (19) et un deuxième bras robotisé (20), aux extrémités opérationnelles (19a, 20a) dont les paires d'épaulements (17, 17a, 18, 18a) respectives sont associées, configurés pour entrer en butée sur chaque surface latérale (2a, 2b) dudit groupe (2) de produits (3), lesdites paires d'épaulements (17, 17a, 18, 18a) étant agencées deux par deux à angles droits les unes par rapport aux autres.

11. Procédé selon la revendication 10, dans lequel lesdits moyens de dépôt (7) comprennent des éléments de translation (22) de ladite plate-forme (10), entre ladite première position (P1) et ladite deuxième position (P2), et vice-versa, le long d'une direction d'avancée (A) des groupes (2) de produits (3), définie par lesdits moyens d'approvisionnement (4),

12. Procédé selon l'une des revendications 10, 11, dans lequel ladite plate-forme (10) comprend au moins un transporteur à rouleaux (11) avec des rouleaux (13) définissant une première surface de support (12) dudit groupe (2) de produits (3).

13. Procédé selon l'une des revendications 10 à 12, dans lequel sur lesdits moyens d'approvisionnement (4), sur ladite plate-forme (10) et sur ladite palette (5), ledit groupe (2) de produits (3) est transféré avec les côtés non parallèles à la direction d'avancée (A), mais inclinés à un certain angle prédéterminé.
